# EUROPÄISCHE PATENTANMELDUNG

(11) **EP 1 101 397 A1**
(43) Veröffentlichungstag der Anmeldung: **23.05.2001**
(21) Anmeldenummer: 99122809.9
(22) Anmeldetag: 17.11.1999
(51) Int. Cl.: A01D 43/08

(54) **Konditioniereinrichtung für Feldhäcksler**

(71) Anmelder: Case Harvesting Systems GmbH, 01844 Neustadt (DE)
(72) Erfinder: von Allwörden, Wilhelm, 01324 Dresden (DE)
(74) Vertreter: Müller, Lutz

(57) **Zusammenfassung**

Die Erfindung betrifft eine Konditioniereinrichtung für Feldhäcksler zum Zerstören der Pflanzenfasern von Häckselgut und sich darin befindender Körner. Dabei geht es um die Erhöhung des Konditioniereffektes und eine zusätzliche Vergleichmäßigung des Häckselgutstromes zur Verbesserung des Auswurfverhaltens.

Das wird erreicht, indem die Konditionierwalzen (12, 12', 12") der Konditioniereinrichtung (11) aus nebeneinander angeordneten Täler und Erhebungen bildenden Teilabschnitten (19) bestehen, wobei deren Erhebungen in die Täler der zusammenwirkenden Konditionierwalzen (12, 12', 12") ragen. Die Teilabschnitte (19) haben die Gestalt von Kegelstümpfen (20), deren große Seitenflächen (22, 22', 22") an den kleinen Seitenflächen (23, 23', 23") der benachbarten Teilabschnitte (19) anliegen. Diese Umfangsflächen (24, 24', 24") gegenüberliegender Teilabschnitte (19) weisen zueinander einen kleinen Spalt (25) auf. Die großen Seitenflächen (22, 22', 22") zusammenwirkender Konditionierwalzen (12, 12', 12") bilden einen Scher- bzw. Schneidspalt (27).

## Beschreibung

Die Erfindung betrifft eine Konditioniereinrichtung für Feldhäcksler, bestehend aus wenigsten zwei zusammenwirkenden Konditionierwalzen, die einerseits zum Anschlagen von sich im Häckselgut befindender Körner zu deren besseren Verdauung durch die Tiere und andererseits zur Zerstörung der Pflanzenfasern des Häckselgutes zur Begünstigung des Gärprozesses im Silo vorgesehen sind, nach den Merkmalen im Oberbegriff des Patentanspruches 1.

An derartige Konditioniereinrichtungen werden heute insbesondere bei leistungsstarken Feldhäckslern höchste Anforderungen an einen höchstmöglichen Konditioniereffekt und darüber hinaus an deren Laufruhe, Störunanfälligkeit, Verschleißfestigkeit und Antriebsleistungsaufnahme gestellt.
Den letzten Stand bezüglich eines höchstmöglichen Konditioniereffektes verkörpert einmal die Konditioniereinrichtung nach der EP 0 525 422 B1, bei der die Konditionierwalzen aus mehreren ineinandergreifenden und auswechselbaren Keilscheiben bestehen, deren Keilflächen einen Winkel 0° <α< 180° einschließen. Die Keilflächen der Keilscheiben weisen entweder unterschiedliche oder keine Profilierungen auf. Die Konditionierwalzen sind mit ihren Rotationsachsen parallel zueinander ausgerichtet, wobei die Keile der einen Konditionierwalze in die Täler zwischen benachbarten Keilen der anderen Konditionierwalze so hineinragen, daß zwischen ihnen nur ein kleiner Spalt bleibt. Eine der Konditionierwalzen ist feststehend im Auswurfschacht drehbar gelagert und die andere kann zum Beispiel bei Fremdkörpereinwirkung in Richtung des halben Keilwinkels "α/2" ausweichen, wobei deren Rotationsachsen zueinander parallel ausgerichtet bleiben. Beide Konditionierwalzen werden über einen vom Häckselaggregat kommenden Hülltrieb gegenläufig und mit annähernd gleicher Umfangsgeschwindigkeit angetrieben. Diese Konditioniereinrichtung ist zwar in der Lage, sich im Häckselgut befindende Körner zu quetschen oder anzuschlagen und die Pflanzenfasern des Häckselgutes weitestgehend zu zerstören, aber dennoch verbleibt der Mangel, daß das so aufbereitete Häckselgut häufig die Ursache für Verstopfungen im nachfolgend angeordneten Auswurfsystem ist. Deshalb ist eine so aufgebaute Konditioniereinrichtung mitverantwortlich für die Begrenzung der Durchsatzleistung an Feldhäckslern.
Eine weitere Konditioniereinrichtung ist mit der DE 197 03 486 A1 bekannt geworden, die von zwei Konditionierwalzen gebildet wird, deren Rotationsachsen parallel zueinander verlaufen und die zwischen sich einen kleinen Spalt belassen, durch den das geförderte Häckselgut hindurchtritt. Die Wellen oder Wellenstummel der Konditionierwalzen sind mit einem Antriebsrad bestückt, über das die Konditionierwalzen in entgegengesetzter Richtung in Drehung versetzt werden. Die Wellenstummel sind endseitig in Lagern des Auswurfschachtes drehbar aufgenommen. Ferner ist die gesamte Umfangsfläche jeder Konditionierwalze mit einer Vielzahl von Abschnitten großer und kleiner Durchmesser gleicher Breite versehen, die koaxial zu ihrer Rotationsachse ausgerichtet sind. Die Anordnung der Abschnitte großer bzw. kleiner Durchmesser ist so getroffen, daß sie radial jeweils gleiche Abmessungen besitzen. Weiterhin sind die jeweiligen Abschnitte zueinander versetzt angeordnet, so daß sie ineinander eingreifen, d. h., daß der Abschnitt großen Durchmessers der einen Konditionierwalze gegenüber dem Abschnitt kleinen Durchmessers der gegenüberliegenden Konditionierwalze zu liegen kommt und in dieses Tal eintaucht. Dabei erfolgt die Verzahnung der Abschnitte so, daß die Stirnseiten benachbarter Abschnitte mit geringstmöglichem Spalt oder gar keinem Spalt aneinander reiben, so daß sich eine Scherkante beim Zusammentreffen der Stirnseiten ergibt. Dadurch werden zwar die Blätter und Stengel des Häckselgutes an den Scherkanten zerschnitten, jedoch bezüglich des Zerkleinerns der Körner und des Zerstörens der Pflanzenfasern des Häckselgutes bestehen gegenüber der Konditioniereinrichtung nach der EP 0 525 422 B 1 entscheidende Nachteile. Der Grund dafür ist, daß der definierte Spalt wie bei der Konditioniereinrichtung nach der EP 0 525 422 B1 nicht verlängert und damit die Konditionierfläche nicht vergrößert wird, wodurch insbesondere bei hohen Erntegutdurchsätzen nur ein oberflächliches Konditionieren möglich ist. Außerdem ist der Effekt des Zerstörens der Pflanzenfasern bei vorstehend genannter EP 0 525 422 B 1 auch deshalb höher, weil durch die größeren Durchmesserunterschiede zusammenwirkender Keilscheiben größere Unterschiede in den Umfangsgeschwindigkeiten zur Verfügung stehen.

Deshalb liegt der Erfindung die Aufgabe zugrunde, eine Konditioniereinrichtung für Feldhäcksler zu schaffen, die einen intensiven Konditioniereffekt auf die Pflanzenfasern des Häckselgutes und sich darin befindende Körner auch bei hohen Erntegutdurchsätzen ausübt und darüber hinaus den Häckselgutstrom so vergleichmäßigt, daß er sich durch einen nachfolgend angeordneten Wurfförderer besser transportieren läßt.
Diese Aufgabe wird gemäß der Erfindung durch die Merkmale des 1. Patentanspruches gelöst, wobei in den Unteransprüchen Merkmale aufgeführt sind, die diese Lösung in vorteilhafter Weise weiterentwickeln.
Durch die schräge Stellung der Umfangsflächen der Teilabschnitte der Konditionierwalzen in bezug auf ihre Rotationsachsen wird einmal die Länge des Spaltes zwischen zusammenwirkenden Umfangsflächen und damit die verfügbare Konditionierfläche erhöht, so daß das Häckselgut beim Konditionieren auseinandergezogen und in der Schichtdicke reduziert wird. Zum anderen sind die Unterschiede der Umfangsgeschwindigkeiten zusammenwirkender Umfangsflächen durch deren schräge Stellung relativ groß. In den Bereichen der Scher- bzw. Schneidspalte bildenden großen Seitenflächen der Teilabschnitte zusammenwirkender Konditionierwalzen wird das Häckselgut zusätzlich noch zerschnitten oder zerrissen.
Aus der Sicht einer kostengünstigen Herstellung hat es sich als zweckmäßig erwiesen, die Teilabschnitte als kegelstumpfförmige Rotationskörper auszubilden, die sich konzentrisch um die Rotationsachsen der Konditionierwalzen erstrekken.
In einer bevorzugten Ausführungsvariante können die Umfangsflächen der Teilabschnitte auch mit Zahnprofil ausgestattet sein, das zur weiteren Erhöhung des Konditioniereffektes beiträgt.
Neben einer Ausführungsvariante gleich breiter Teilabschnitte kann es auch sinnvoll sein, die Breite der Teilabschnitte auf den Konditionierwalzen zu variieren. So können zum Beispiel breitere Teilabschnitte im Außenbereich angeordnet sein, wenn dort mit nicht soviel Blättern oder Pflanzenteilen zu rechnen ist - oder umgekehrt.
Für den grundsätzlichen Aufbau erfindungsgemäßer Konditionierwalzen bieten sich wenigstens zwei Möglichkeiten an. Einmal können die Teilabschnitte direkt verdrehfest auf den Wellen der Konditionierwalzen befestigt und mit axial ausgerichteten Spannschrauben verspannt sein. Es erscheint aber auch aus festigkeitsmäßiger Sicht sinnvoll, die Teilabschnitte als Ringe auszubilden, die auf eine Trägerrolle formschlüssig aufgesetzt sind.
Schließlich hat es sich in der Praxis als zweckmäßig erwiesen, eine der zusammenwirkenden Konditionierwalzen in einer Richtung quer zu ihrer Rotationsachse ausschwenkbar im Gehäuse der Konditioniereinrichtung aufzuhängen, wenn doch einmal ein Fremdkörper in den Bereich der Konditionierwalzen gelangt.

Zusammenfassend ist damit festzustellen, daß die erfindungsgemäße Konditioniereinrichtung sämtliche Vorteile aller bisher bekannten Konditioniereinrichtungen in sich vereint. Das heißt, sie übt einen sehr intensiven Konditioniereffekt auf die Pflanzenfasern des Häckselgutes und sich darin befindender Körner aus. Das tut sie ebenfalls noch bei hohen Erntegutdurchsätzen. Darüber hinaus vergleichmäßigt sie durch das zusätzliche Zerschneiden und Zerreißen des Häckselgutes dessen Fluß durch den Auswurfschacht und den -bogen, so daß ein Feldhäcksler mit dieser erfindungsgemäßen Konditioniereinrichtung ein ausgezeichnetes Auswurfverhalten hat.

Die Erfindung soll nun anhand eines Ausführungsbeispiels näher erläutert werden, wobei die einzelnen Figuren zeigen:
- Fig. 1:: die linke Seite eines selbstfahrenden Feldhäckslers als Teilschnitt durch die Längsmittelebene mit einer aus drei Konditionierwalzen bestehenden Konditioniereinrichtung
- Fig. 2:: eine Ansicht A aus Fig. 1 auf das vordere Konditionierwalzenpaar in der Konditionierposition
- Fig. 3:: eine Konditioniereinrichtung wie in Fig. 2, wobei eine der Konditionierwalzen durch die Einwirkung eines Fremdkörpers ausgeschwenkt ist.

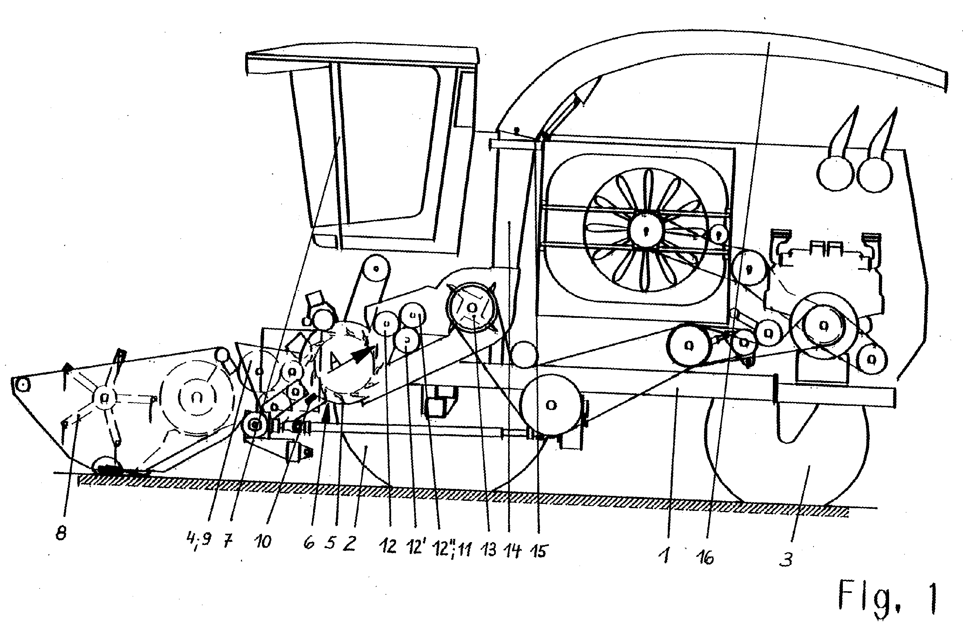

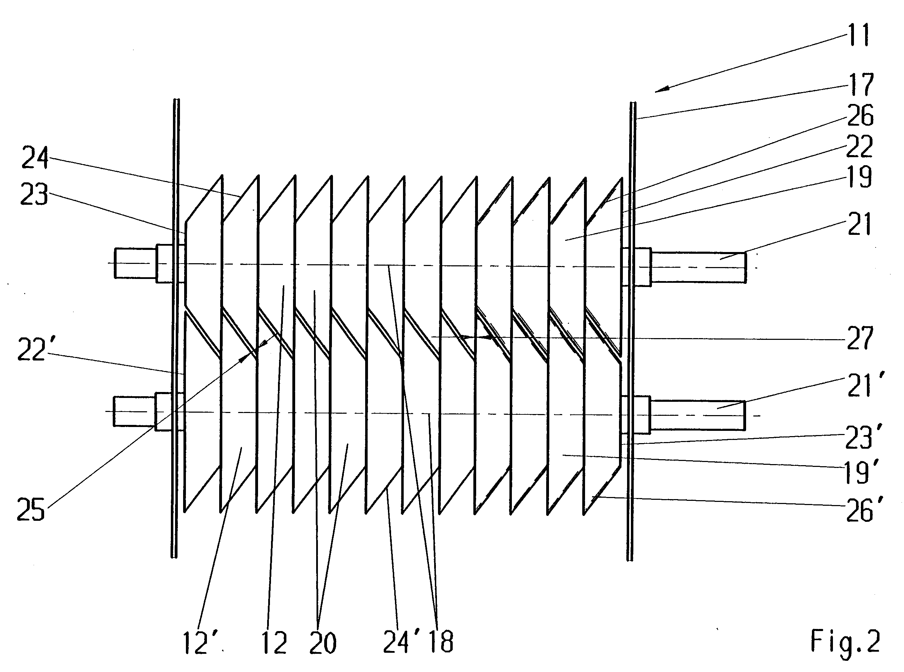

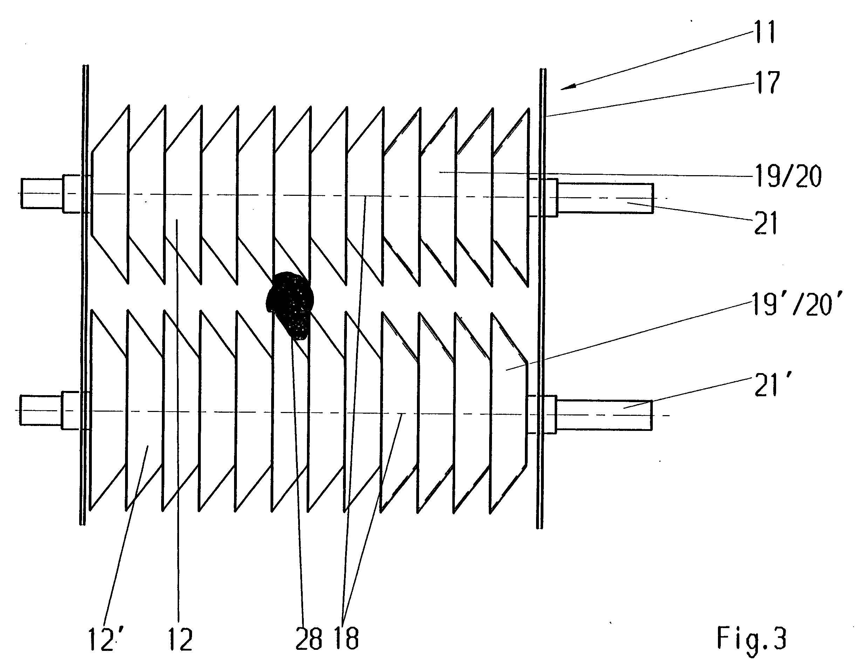

Der in der Figur 1 dargestellte selbstfahrende Feldhäcksler weist einen Rahmen 1 auf, der von Vorderrädern 2 und Hinterrädern 3 getragen wird. Oberhalb des aus der Zuführeinrichtung 4 und der Häckseltrommel 5 bestehenden Häckselaggregates 6 befindet sich die Fahrerkabine 7, von der aus der Fahrer den vorn an der Zuführeinrichtung 4 angehangenen Adapter 8 gut einsehen kann. Bei diesem Adapter 8 kann es sich um einen Schwadaufnehmer, ein Feldfutter- bzw. Maisschneidwerk oder Spezialadapter zur Aufnahme und zum Mähen von landwirtschaftlichen Erntegütern aller Art handeln. Das Erntegut wird vom Adapter 8 an die Zuführeinrichtung 4 weitergeleitet, deren Einzugsorgane 9 es der Häckseltrommel 5 zuführen, die mit der ortsfesten Gegenschneide 10 zusammenwirkt. Von dort aus gelangt das Häckselgut in eine Konditioniereinrichtung 11, die in diesem Ausführungsbeispiel aus drei zusammenwirkenden Konditionierwalzen 12, 12', 12" besteht. Danach werfen die Konditionierwalzen 12, 12', 12" das Häckselgut in das Gehäuse eines Wurfgebläses 13, so daß es problemlos den sich daran anschließenden Auswurfschacht 14 und den über einen Drehkranz 15 schwenkbeweglich angeschlossenen Auswurfbogen 16 mit hoher Geschwindigkeit passieren kann und schließlich von da aus auf einen mitgeführten Anhänger gelangt.
Die in den Figuren 2 und 3 im Detail dargestellte Konditioniereinrichtung 11 wird nach Fig. 1 zwar von drei Konditionierwalzen 12, 12', 12" gebildet, jedoch genügt zum Erkennen der erfindungswesentlichen Merkmale die Betrachtung der beiden in Fahrtrichtung gesehenen vorn liegenden zwei Konditionierwalzen 12, 12'. Außerdem ist die Erfindung an einer Konditioniereinrichtung 11 mit zwei Konditionierwalzen 12, 12' mit dem gleichen Erfolg zu realisieren, so daß nachfolgend nur auf den Aufbau von zwei den Konditioniereffekt bewirkenden Konditionierwalzen 12, 12' näher eingegangen wird. Die Konditionierwalzen . 12, 12' sind im Gehäuse 17 der Konditioniereinrichtung 11 gegenüberliegend angeordnet, wobei ihre Rotationsachsen 18 parallel zueinanander ausgerichtet sind. Sie sind in nicht gezeigten Lagerungen im Gehäuse 17 drehbar aufgenommen und von der Häckseltrommel 5 aus über einen herkömmlichen Riementrieb gegensinnig rotierend angetrieben. Jede Konditionierwalze 12, 12' besteht aus mehreren gleich gestalteten Teilabschniten 19, die als rotationssymmetrische Körper mit sich auf beiden Seiten wesentlich unterscheidenden Durchmessern ausgebildet sind. In den Figuren 2 und 3 weisen die Teilabschnitte 19 aus der Sicht einer kostengünstigen Herstellung die Form von Kegelstümpfen 20 auf.
Sie sind in axialer Richtung der Konditionierwalzen 12, 12' gesehen so nebeneinander auf deren Wellen 21, 21' angeordnet, daß immer ihre großen Seitenflächen 22, 22' an den kleinen Seitenflächen 23, 23' der benachbarten Teilabschnitte 19 anliegen. Die sich in axialer Richtung der Konditionierwalzen 12, 12' erstreckenden Breiten aller Teilabschnitte 19 sind in diesem Ausführungsbeispiel gleich groß.
Die völlig gleich aufgebauten Konditionierwalzen 12, 12' weisen durch die beschriebene Form der Teilabschnitte 19 im Bereich von deren großen Seitenflächen 22, 22' Erhebungen und von da aus sich bis zum Bereich der kleinen Seitenflächen 23, 23' erstreckende Täler mit zunehmender Tiefe auf.
Die Zuordnung der Konditionierwalze 12 zur Konditionierwalze 12' ist nun so gewählt, daß die Erhebungen der einen Konditionierwalze 12, 12' in die Täler der gegenüberliegenden Konditionierwalze 12, 12' ragen. Dabei stehen sich die Umfangsflächen 24, 24' der Teilabschnitte 19 mit einem gleichmäßigen Spalt 25 gegenüber, der kleiner ist als die im Häckselgut enthaltenen Körner. Der Spalt 25 kann je nach den Erntegutbedingungen und -arten unterschiedlich weit eingestellt werden, wozu in den Figuren 1 bis 3 nicht abgebildete, aber im Stand der Technik bekannte Vorrichtungen, verwendet werden.
Gemäß der Darstellung in der rechten Bildhälfte der Figur 2 ist es möglich, die Umfangsflächen 24, 24' mit einem Zahnprofil 26, 26' auszustatten.
In Figur 2 ist außerdem noch zu erkennen, daß die großen Seitenflächen 22, 22' der zusammenarbeitenden Konditionierwalzen 12, 12' sehr nahe und sich bereichsweise überdeckend nebeneinander liegen, daß sie zwischen sich einen Scher- bzw. Schneidspalt 27 bilden.

Schließlich ist noch in Figur 3 gezeigt, daß eine der Konditionierwalzen 12, 12' im Gehäuse 17 der Konditioniereinrichtung 11 in einer Richtung quer zu ihrer Rotationsachse 18 ausschwenkbar aufgehangen ist, wenn ein Fremdkörper 28 die Konditionierwalzen 12, 12' passiert, dessen Außenabmessungen größer sind als der Spalt 25 zwischen den Umfangsflächen 24, 24'.

### Bezugszeichenaufstellung

- 1: Rahmen
- 2: Vorderräder
- 3: Hinterräder 2
- 4: Zuführeinrichtung
- 5: Häckseltrommel
- 6: Häckselaggregat
- 7: Fahrerkabine
- 8: Adapter
- 9: Einzugsorgane
- 10: Gegenschneide
- 11: Konditioniereinrichtun
- 12, 12', 12": Konditionierwalzen
- 13: Wurfgebläse
- 14: Auswurfschacht
- 15: Drehkranz
- 16: Auswurfbogen
- 17: Gehäuse
- 18: Rotationsachse
- 19: Teilabschnitt
- 20: Kegelstumpf
- 21, 21', 21": Welle
- 22, 22',22": große Seitenfläche
- 23,23'. 23": kleine Seitenfläche
- 24, 24', 24": Umfangsfläche
- 25: Spalt
- 26, 26', 26": Zahnprofil
- 27: Scher- bzw. Schneidspalt
- 28: Fremdkörper

## Patentansprüche

1. Konditioniereinrichtung für Häckselgut mit wenigstens zwei gegensinnig angetriebenen Konditionierwalzen, deren Rotationsachsen parallel zueinander ausgerichtert sind und die über ihre Breite gesehen aus abwechselnd Erhebungen und Täler bildenden Teilabschnitten bestehen, wobei deren Erhebungen in die Täler wenigstens einer anderen Konditionierwalze ragen, dadurch gekennzeichnet, daß
a) jeder Teilabschnitt (19) als rotationssymmetrischer Körper ausgebildet ist, der auf der einen Seite einen wesentlich größeren Durchmesser als auf der anderen Seite aufweist,
b) die eine Konditionierwalze (12, 12', 12") bildenden Teilabschnitte (19) mit ihren großen Seitenflächen (22, 22', 22") an den kleinen Seitenflächen (23, 23', 23") der benachbarten Teilabschnitte (19) anliegen,
c) die Umfangsflächen (24, 24', 24") der Teilabschnitte (19) sich gegenüberstehender Konditionierwalzen (12, 12', 12") zueinander einen Spalt (25) aufweisen, der kleiner ist als die im Häckselgut enthaltenen Körner,
d) die großen Seitenflächen (22, 22', 22") der Teilabschnitte (19) zusammenwirkender Konditionierwalzen (12, 12', 12") wenigstens bereichsweise einen Scher- bzw. Schneidspalt (27) bilden.

2. Konditioniereinrichtung nach Anspruch 1, dadurch gekennzeichnet, daß die Teilabschnitte (19) als sich um die Rotationsachse (18) der Konditionierwalze (12, 12', 12") konzentrisch erstreckende Kegelstümpfe (20) ausgebildet sind.

3. Konditioniereinrichtung nach den Ansprüchen 1 und 2, dadurch gekennzeichnet, daß die Umfangsflächen (24, 24', 24") der Teilabschnitte (19) ein Zahnprofil (26, 26', 26") aufweisen.

4. Konditioniereinrichtung nach den Ansprüchen 1 bis 3, dadurch gekennzeichnet, daß die sich in axialer Richtung der Konditionierwalze (12, 12', 12") erstreckende Breite aller Teilabschnitte (19) einer Konditionierwalze (12, 12', 12") gleich groß ist.

5. Konditioniereinrichtung nach den Ansprüchen 1 bis 3, dadurch gekennzeichnet, daß die sich in axialer Richtung der Konditionierwalze (12, 12', 12") erstreckende Breite gegenüberliegend angeordneter Teilabschnitte (19) zusammenwirkender Konditionierwalzen (12, 12', 12") gleich groß ist, jedoch über die Breite der Konditionierwalzen (12, 12', 12") gesehen unterschiedlich groß ist.

6. Konditioniereinrichtung nach den Ansprüchen 1 bis 5, dadurch gekennzeichnet, daß die Teilabschnitte (19) der Konditionierwalzen (12, 12', 12") auf deren Wellen (21, 21', 21") befestigt und mit axial ausgerichteten Spannschrauben zusammengespannt sind.

7. Konditioniereinrichtung nach den Ansprüchen 1 bis 5, dadurch gekennzeichnet, daß die Teilabschnitte (19) als Ringe ausgebildet sind, die auf eine Trägerrolle formschlüssig aufgesetzt sind.

8. Konditioniereinrichtung nach den Ansprüchen 1 bis 6, dadurch gekennzeichnet, daß eine der zusammenwirkenden Konditionierwalzen (12, 12', 12") in einer Richtung quer zu ihrer Rotationsachse (18) ausschwenkbar aufgehangen ist.
